# EUROPÄISCHE PATENTSCHRIFT

(11) **EP 4 355 960 B1**
(45) Veröffentlichungstag und Bekanntmachung des Hinweises auf die Patenterteilung: **18.03.2026**
(21) Anmeldenummer: 22735285.3
(22) Anmeldetag: 14.06.2022
(51) Int. Cl.: B60R 15/04, E03D 5/014, E03D 11/11, E03D 5/00, E03F 1/00, E03D 11/02

(54) **VAKUUMTOILETTE SOWIE VAKUUMTANK FUER EINE VAKUUMTOILETTE**
VACUUM TOILET AND VACUUM TANK FOR A VACUUM TOILET
TOILETTE À VIDE ET RÉSERVOIR À VIDE DESTINÉ À UNE TOILETTE À VIDE

(30) Priorität: 14.06.2021 AT 504752021
(43) Veröffentlichungstag der Anmeldung: 24.04.2024
(73) Patentinhaber: EOOS Next GmbH, 1010 Wien (AT)
(72) Erfinder: GRUENDL, Harald, 1030 Wien (AT); FIERMONTE, Federico, 00184 Rom (IT); ESTRADA LEÓN, Oscar, 1070 Wien (AT); SAMPL, Georg, 1140 Wien (AT)
(74) Vertreter: Speringer, Markus
(86) Internationale Anmeldenummer: PCT/AT2022/060198
(87) Internationale Veröffentlichungsnummer: WO 2022/261688

(56) Entgegenhaltungen:
- EP-A2- 0 287 350
- EP-B1- 0 330 490
- WO-A1-2006/104231

## Beschreibung

### Technisches Gebiet

Die Erfindung betrifft einen Vakuumtank für eine Vakuumtoilette, wobei der Vakuumtank eine an einer Seitenwand des Tanks angeordnete Einlassöffnung, welche über ein zwischengeschaltetes Ventil mit dem Hauptabfluss einer Muschel verbindbar ist, und eine am tiefsten Punkt angeordnete Auslassöffnung für die Weiterleitung des abgesaugten Abwasserstroms umfasst, und wobei ferner über die Auslassöffnung oder über weitere Öffnungen im Vakuumtank die Luft im Tank auf einen Druck unterhalb des Atmosphärendrucks vakuumierbar ist, wobei der Vakuumtank durch ein Trennelement in ein oberes und ein unteres Volumen unterteilt ist, und wobei das Trennelement in etwa auf der Höhe der Einlassöffnung im Tank angeordnet ist.

Ferner betrifft die Erfindung eine Vakuumtoilette umfassend eine Muschel mit einem Hauptabfluss, eine Spülung, einen Vakuumtank mit einer in einer Seitenwand angeordneten Einlassöffnung und einer am tiefsten Punkt angeordneten Auslassöffnung, wobei der Hauptabfluss der Muschel über ein Ventil mit der Einlassöffnung des Vakuumtanks verbunden ist, sowie eine Steuereinheit mit zumindest einer Bedieneinheit für den Benutzer, über welche ein Spülvorgang auslösbar ist.

### Stand der Technik

Vakuumtoiletten werden oft in Fahrzeugen, Schiffen oder Zügen eingesetzt, da sie einen sehr geringen Spülwasserbedarf aufweisen. Bei einem Spülgang werden dabei üblicherweise nur etwa ein Liter Spülwasser benötigt. Die Muschel, deren Hauptabfluss mit einem Ventil geschlossen ist, wird bei einem Spülvorgang zuerst mit der Spülwassermenge gespült, danach wird das Spülwasser zusammen mit Fäkalien, Urin und Papier durch das Ventil mit hoher Geschwindigkeit abgesaugt. Damit die ausreichende Sogwirkung erreicht werden kann, ist ein Vakuumbehälter entsprechender Größe notwendig, welcher zuerst mittels einer Pumpe vakuumiert wird. Beim Öffnen des Ventils findet dann ein rascher Druckausgleich statt, bei dem der gesamte Abwasserstrom in den Vakuumbehälter gesaugt wird. Anschließend wird das Ventil geschlossen und der Abwasserstrom aus dem Vakuumtank weitertransportiert.

Derartige Toiletten sind aufgrund des geringen Wasserbedarfs auch attraktiv für die Verwendung als Trenntoilette, bei welchen man Abwasserströme mit Fäkalien von solchen ohne Fäkalien trennen und separaten Anwendungen zuführen möchte. Auch in diesem Kontext ist ein besonders geringer Spülwasserbedarf für die weitere Verarbeitung der Abwasserströme vorteilhaft.

Es hat sich gezeigt, dass ein limitierender Faktor für die zu verwendende Spülwassermenge der Vakuumtank ist. Er muss ein gewisses Volumen von meist mehreren Litern, beispielsweise von 6 bis 8 Litern für eine durchschnittliche Toilette, aufweisen, um den nötigen Sog für einen Spülvorgang bereitstellen zu können. Beim Spülvorgang an sich wird der Abwasserstrom, bestehend beispielsweise aus Fäkalien, Urin, Papier und Spülwasser mit hoher Geschwindigkeit in den Tank gesaugt, wodurch es beim Eintritt in den Vakuumtank, insbesondere bei einem mit Fäkalien beladenen Abwasserstrom zu einer explosionsartigen Verteilung über die gesamten inneren Seitenwände des Vakuumtanks kommt. Damit der Vakuumtank beim Weitertransport des Abwasserstroms entlang der Seitenwände nicht nach und nach verklebt und in seiner Funktion gestört wird, kann die Menge an Spülwasser nicht weiter reduziert werden.

Insbesondere wenn man die Toilette als Trenntoilette einsetzen möchte, bei der Fäkalienströme mit hohem Feststoffanteil einer Weiterverarbeitung mit hohem Feststoffanteil zugeführt werden sollen, ist es notwendig die Spülwassermenge nochmals deutlich zu reduzieren, damit der Fäkalienstrom nicht im Anschluss durch energieintensive Maßnahmen weiter aufbereitet werden muss. Sofern auch noch nach dem Vakuumtank die Abwasserströme je nach Art unterschiedlich behandelt werden sollen, muss die Spülwassermenge dabei dennoch hoch genug sein, um zwischen einzelnen Spülvorgängen eine möglichst geringe Querkontamination von hintereinanderliegenden Abwasserströmen zu erreichen.

Die EP 0330490 B1 zeigt einen Abwassertank für ein in einem Transportfahrzeug installiertes Vakuumabwassersystem. Der Tank weist einen Zyklonabscheider für im Luftstrom enthaltene Feuchtigkeitströpfchen auf. Der Aufbau des Tanks ist kompliziert und benötigt viele Einzelteile, wobei die gezeigten Einrichtungen nicht dem Einsparen von Spülwasser dienen.

Die EP 0287350 A2 und die WO 2006/104231 A1 zeigen jeweils Vakuumtoilettensysteme mit Zerkleinerungsvorrichtungen für Fäkalien. Trennelemente für die Einsparung von Spülwasser durch Verminderung des für das Abwasser zur Verfügung stehenden Tankvolumens sind nicht gezeigt.

### Darstellung der Erfindung

Aufgabe der vorliegenden Erfindung ist es somit, einen Vakuumtank für eine Vakuumtoilette zu schaffen, mittels welchem der Spülwasserbedarf nochmals deutlich gesenkt werden kann. Weiters ist es eine Aufgabe der vorliegenden Erfindung, eine Vakuumtoilette mit geringem Spülwasserbedarf zu schaffen, welche auch als Trenntoilette einsetzbar ist, bei der die unterschiedlichen Abwasserströme auch nach dem Durchtritt durch den Vakuumtank jeweils einzeln weiterverarbeitet werden können. Sowohl der Vakuumtank als auch die Vakuumtoilette sollen in ihrem Aufbau möglichst wenig gegenüber bekannten Systemen abgeändert werden, damit weitgehend bereits standardisierte Komponenten eingesetzt werden können, wodurch die Herstellungskosten gering gehalten werden.

Diese Aufgabe wird zum Einen durch einen Vakuumtank gelöst, welcher ein Trennelement aufweist, welches gemeinsam mit einem Seitenwandabschnitt des Vakuumtanks eine entlang des Umfangs des Tanks verlaufende, vorzugsweise schraubenlinienförmig ausgebildete, nach unten offene Rinne ausbildet, welche ausgehend von der Einlassöffnung zumindest einmal um den im Wesentlichen horizontalen Umfang herum zum unteren Volumen hin verläuft, und wobei mittig im Trennelement eine Durchtrittsöffnung zwischen oberem und unterem Volumen angeordnet ist, welche zum unteren Volumen hin trichterförmig ausgebildet ist, und wobei gegebenenfalls die Oberseite des Trennelements ebenfalls trichterförmig zur Durchtrittsöffnung hin zulaufend ausgebildet ist. Der Einsatz des Trennelements erlaubt es, die Spülwassermenge deutlich zu reduzieren. Beim Spülvorgang wird der Abwasserstrom von der Einlassöffnung weg über den längeren Weg der am Umfang entlanglaufenden Rinne gebremst und kann sich nur nach unten in das untere Volumen ausbreiten, wodurch es zu keiner explosionsartigen Verteilung im gesamten Innenraum des Vakuumtanks kommt. Der Abwasserstrom wird so gezielt zu der im unteren Volumen des Vakuumtanks angeordneten Auslassöffnung hin geleitet. Das obere Volumen kommt niemals mit dem Abwasserstrom in Berührung und steht damit allein für den Aufbau des Vakuums zur Verfügung. Dadurch kann die Rinne sowie das untere Volumen mit weniger Spülwasser pro Spülvorgang gereinigt werden. Versuche haben gezeigt, dass eine Reduktion der Spülwassermenge auf nur 300 ml möglich ist und dennoch der gesamte wesentliche Abschnitt der Rinne und des unteren Volumens bei einem Spülvorgang vollständig ausgeschwemmt werden. Dies war selbst bei stark verschmutzten Fäkalienströmen, wie im Falle von Durchfall möglich. Durch die Durchtrittsöffnung im Trennelement kann das gesamte Volumen des Vakuumtanks für die Bereitstellung des Vakuums für den nächsten Spülvorgang genutzt werden. Das Trennelement kann dabei genau in der Hälfte des Vakuumtanks oder bevorzugt auch versetzt in der unteren Hälfte, beispielsweise auf einem Drittel der Höhe platziert sein.

Durch die trichterförmige Ausbildung der Durchtrittsöffnung im Trennelement wird zusätzlich sichergestellt, dass es zu keiner Verschmutzung des oberen Volumens im Vakuumtank kommt. Selbst wenn ein Abwasserstrom sich mit höherer Geschwindigkeit im unteren Volumen verteilen sollte, so wird durch den trichterförmigen Aufbau der Durchtrittsöffnung sichergestellt, dass praktisch keine Flüssigkeit den Weg in das obere Volumen findet. Selbst wenn ein Anteil des Abwasserstroms durch die Durchtrittsöffnung in das obere Volumen gelangen sollte, so würde er über eine ebenfalls trichterförmig ausgeführte Oberseite des Trennelements wieder in Richtung Durchtrittsöffnung in das untere Volumen abgeführt werden.

Gemäß einem weiteren bevorzugten Merkmal ist es vorgesehen, dass das Trennelement gemeinsam mit einem das untere Volumen ausbildenden Tankabschnitt einstückig ausgebildet ist und über die Durchtrittsöffnung mit einem das obere Volumen ausbildenden Tankabschnitt verbunden ist. Aus fertigungstechnischen Gründen kann es von Vorteil sein, wenn das Trennelement gemeinsam mit dem das untere Volumen ausbildenden Tankabschnitt als gemeinsames Element hergestellt wird. Der untere Tankabschnitt verfügt dabei über die Einlassöffnung im Bereich des Trennelements und die Auslassöffnung an der tiefsten Stelle. Das Trennelement bildet die Deckfläche für diesen Tankabschnitt und weist nach oben hin ausgerichtet die Durchtrittsöffnung auf. Mit dem unteren Tankabschnitt kann dann ein weiterer Tankabschnitt, welcher das obere Tankvolumen ausbildet, über die Durchtrittsöffnung verbunden werden. Das obere Tankvolumen kann dabei in seinem unteren Bereich zur Durchtrittsöffnung hin trichterförmig zulaufend ausgebildet sein.

Die Aufgabe der Erfindung wird ferner durch eine eingangs genannte Vakuumtoilette gelöst, die dadurch gekennzeichnet ist, dass der Vakuumtank durch ein Trennelement in ein oberes und ein unteres Volumen unterteilt ist, wobei das Trennelement in etwa auf der Höhe der Einlassöffnung im Tank angeordnet ist und gegebenenfalls gemeinsam mit einem Seitenwandabschnitt des Vakuumtanks eine entlang des Umfangs des Tanks verlaufende, vorzugsweise schraubenlinienförmig ausgebildete, nach unten offene Rinne ausbildet, welche ausgehend von der Einlassöffnung zumindest einmal um den im wesentlichen horizontalen Umfang herum zum unteren Volumen hin verläuft, und wobei mittig im Trennelement eine Durchtrittsöffnung zwischen oberem und unterem Volumen angeordnet ist. Durch das Vorsehen eines entsprechenden Vakuumtanks in einer Vakuumtoilette werden auch hier die oben beschriebenen Vorteile verwirklicht. Bis auf die Position der Einlassöffnung am Vakuumtank sowie des Einbaus des Trennelements können weiterhin Standardkomponenten verbaut werden, wodurch die Herstellungskosten gering gehalten werden.

Die Durchtrittsöffnung im Trennelement ist zum unteren Volumen hin trichterförmig ausgebildet, wobei gegebenenfalls die Oberseite des Trennelements ebenfalls trichterförmig zur Durchtrittsöffnung hin zulaufend ausgebildet ist. Wie bereits oben beschrieben ergibt sich dadurch der Vorteil, dass praktisch kein Anteil des Abwasserstroms in das obere Volumen des Vakuumtanks gelangen bzw. dort verbleiben kann.

Wie ebenfalls bereits oben im Zusammenhang mit dem Vakuumtank beschrieben, ist es ein weiteres bevorzugtes Merkmal, dass das Trennelement gemeinsam mit einem das untere Volumen ausbildenden Tankabschnitt einstückig ausgebildet ist und über die Durchtrittsöffnung mit einem das obere Volumen ausbildenden Tankabschnitt verbunden ist. Dies kann Vorteile für eine kostengünstige Herstellung haben.

Gemäß einer bevorzugten Ausführungsform ist es ferner vorgesehen, dass stromabwärts der Auslassöffnung des Vakuumtanks ein Dreiwegeventil mit einem Eingang und zwei Ausgängen vorgesehen ist, welches über die Steuereinheit ansteuerbar ist, um den Abwasserstrom je nachdem, ob es sich um einen Urin- oder Fäkalienstrom handelt, in zwei stromabwärts angeordnete unterschiedliche Abflussleitungen zu lenken. Eine derartig ausgestaltete Vakuumtoilette ermöglicht es, unterschiedliche Abwasserströme effektiv zu trennen. So kann beispielsweise ein Abwasserstrom bestehend aus Urin, Spülwasser und eventuell Papier in einen Ausgang geleitet werden, wohingegen ein Abwasserstrom aus Fäkalien, Spülwasser, Papier und Urin in einen anderen Ausgang geleitet wird. Durch den geringen Spülwasseranteil ist es möglich, Fäkalienabwasserströme zu erreichen, die einen Feststoffanteil von 7-12% aufweisen. Dadurch kann der entsprechende Fäkalienabwasserstrom energieeffizient weiterverarbeitet werden.

Gemäß einer möglichen bevorzugten Variante ist es dabei vorgesehen, dass die Umschaltung des Dreiwegeventils durch Eingabe an der Bedieneinheit erfolgt. Im einfachsten Fall erfolgt die Umschaltung zwischen den beiden Abflussleitungen bereits bei der Auslösung des Spülvorgangs. Wie auch bei üblichen Wasserspartoiletten hat der Nutzer beispielsweise eine Spültaste für "kleine" und "große" Spülung, und entscheidet durch die Benutzung der Spültaste, ob es sich um einen mit Fäkalien belasteten Abwasserstrom handelt oder nicht. Im vorliegenden Fall wird zwar die Spülwassermenge nicht verändert, sondern nur das Dreiwegeventil entsprechend gestellt, aber da diese Art der Spültasten für einen Großteil der Nutzer bereits bekannt sind, muss keine neue Bedienung gelernt werden und die Anzahl der Fehlbenutzungen wird dadurch minimiert.

Alternativ dazu ist es gemäß einer alternativen bevorzugten Variante vorgesehen, dass in der Muschel eine Sensoreinheit vorgesehen ist, die mit der Steuereinheit verbunden ist und die Art des Abwasserstroms, nämlich ob es sich um einen Urin- oder Fäkalienstrom handelt, erfasst, und die Umschaltung des Dreiwegeventils aufgrund der Sensordaten durch einen Steuerimpuls von der Steuereinheit erfolgt. Um jeglichen Nutzerfehler auszuschließen, kann die Auswahl der richtigen Abflussleitung auch aufgrund einer Sensoreinheit erfolgen, die eine entsprechende Information an die Steuereinheit liefert. Ein möglicher Sensor ist ein in der Muschel montierter optischer Sensor, welcher den Inhalt der Muschel erfasst und daraufhin weiterleitet, ob es sich um einen Fäkalienabwasserstrom handelt oder nicht. Die Messung erfolgt dabei ebenfalls bei der Auslösung des Spülvorgangs und der ermittelte Sensorwert wird von der Steuereinheit ausgewertet und das Dreiwegeventil entsprechend eingestellt. Es versteht sich für den Durchschnittsfachmann, dass es anstelle eines Dreiwegeventils auch andere äquivalente Ausführungsformen geben kann. So kann der Vakuumtank beispielsweise zwei getrennte Auslassöffnungen an der tiefsten Stelle aufweisen, die über jeweilige Ventile verfügen, die von der Steuereinheit ansteuerbar sind.

Ein zusätzliches bevorzugtes Merkmal der Vakuumtoilette ist es, dass in der Muschel bereits stromaufwärts des Hauptabflusses eine weitere Trennvorrichtung zur Ableitung eines Großteils des Urinstroms vorgesehen ist. Dies erlaubt eine noch effektivere Trennung der Abwasserströme. Eine besonders einfach zu realisierende Trennvorrichtung zur Ableitung des Urinstroms ist beispielsweise in der AT 521114 offenbart. Bei der dort beschriebenen Lösung wird der Urinstrom direkt über die Muschelwandung aufgrund des Teekanneneffekts in eine separate Ableitung geleitet. Dadurch entstehen am Hauptabfluss der Muschel nur mehr Abwasserströme die entweder nur Fäkalien, Papier und Spülwasser, oder überhaupt nur Papier und Spülwasser beinhalten.

Es ist ein weiteres bevorzugtes Merkmal, dass in der stromabwärts des Dreiwegeventils angeordneten Abflussleitung für den fäkalienfreien Abwasserstrom eine Filtereinrichtung vorgesehen ist. Um aus dem Urinabwasserstrom bzw. aus dem fast reinen Spülwasserabwasserstrom auch noch das Papier zu entfernen, kann eine entsprechende Filtereinrichtung eingesetzt werden. Hier gibt es im Stand der Technik unterschiedliche Lösungen, wie beispielsweise eine Abtrennung über eine Schraube, über eine Zentrifuge oder ähnliches. Bei einer bereits in der Muschel stattfindenden Abtrennung des Urinstroms kann ein reiner Spülwasserstrom somit nach Durchlaufen der Filteranlage beispielsweise auch sehr einfach für eine erneute Spülung aufbereitet werden. Der Gesamtwasserverbrauch der Vakuumtoilette kann dadurch noch weiter gesenkt werden.

Schließlich ist es ein weiteres bevorzugtes Merkmal, dass stromabwärts der Auslassöffnung eine Zerkleinerungspumpe angeordnet ist, welche den aus dem Vakuumtank kommenden Abwasserstrom weiterbefördert und gegebenenfalls homogenisiert, wobei stromabwärts der Zerkleinerungspumpe gegebenenfalls ein Dreiwegeventil mit einem Eingang und zwei Ausgängen vorgesehen ist, wobei ein Ausgang mit der weiteren Abflussleitung verbunden ist und der zweite Ausgang über eine Rückführung mit dem unteren Volumen des Vakuumtanks verbunden ist. Gerade bei einem mit Fäkalien belasteten Abwasserstrom, welcher beispielsweise auch Toilettenpapier beinhaltet, ist es vorteilhaft, den Abwasserstrom für den weiteren Transport und die weitere Aufbereitung zu homogenisieren. Um eine ausreichende Homogenisierung zu erreichen kann eine Zerkleinerungspumpe vorgesehen werden, welche den Abwasserstrom aus dem unteren Volumen des Vakuumtanks abpumpt. Aufgrund des sehr geringen Spülwasservolumens kann es vorkommen, dass ein einziger Durchgang durch die Zerkleinerungspumpe zu keiner ausreichenden Homogenisierung führt, weshalb eine Rückführung in das untere Volumen des Vakuumtanks vorgesehen sein kann. Dadurch kann der relevante Abwasserstrom in den Vakuumtank im Kreis rückgepumpt werden und somit mehrfach durch die Zerkleinerungspumpe transportiert werden, bis er vollständig homogenisiert ist. Anschließend wird der homogenisierte Abwasserstrom in die Abflussleitung geleitet und dort der weiteren Aufbereitung zugeführt, wie sie beispielsweise weiter oben beschrieben wurde. Die Zerkleinerungspumpe sowie die Dauer des Rückführungskreislaufs werden ebenfalls von der Steuereinheit gesteuert.

### Kurze Beschreibung der Zeichnungen

Die Erfindung wird nun in größerem Detail anhand von Ausführungsbeispielen sowie mit Hilfe der beiliegenden Figuren beschrieben. Dabei zeigen
Fig. 1 und 2 unterschiedliche schematische Ansichten eines erfindungsgemäßen Vakuumtanks,
Fig. 3 und 4 unterschiedliche schematische Ansichten eines Trennelements,
Fig. 5 bis 8 schematische Schaltbilder von möglichen Ausführungsformen erfindungsgemäßer Vakuumtoiletten mit darin angeordnetem Vakuumtank, Fig. 9 eine schematische Schnittansicht eines unteren Tankabschnitts mit integriertem Trennelement an der Oberseite.

### Weg(e) zur Ausführung der Erfindung

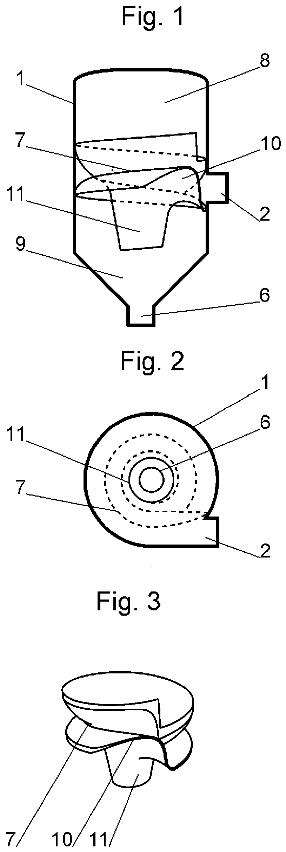

In den Fig. 1 und 2 ist schematisch ein erfindungsgemäßer Vakuumtank 1 dargestellt. In der Fig. 1 ist der Tank selbst geschnitten dargestellt, während ein eingebautes Trennelement 7 vollständig mit strichliert eingezeichneten unsichtbaren Linien dargestellt ist. In der Fig. 2 ist die gleiche Darstellung in einer Sicht von oben gezeigt. Der Vakuumtank 1 weist an einer Seitenwand in etwa knapp unterhalb seiner halben Höhe eine Einlassöffnung 2 auf. Am tiefsten Punkt des Vakuumtanks 1 befindet sich eine Auslassöffnung 6. Das innere Volumen des Vakuumtanks wird durch das eingebaute Trennelement 7 in ein oberes Volumen 8 und ein unteres Volumen 9 unterteilt. Das Trennelement 7 weist eine schraubenlinienförmig verlaufende nach unten offene Rinne 10 auf, welche den eintretenden Abwasserstrom von der Einlassöffnung 2 über den Umfang des Vakuumtanks 1 hinweg abbremst und nach unten in Richtung der Auslassöffnung 6 lenkt. In der Mitte des Trennelements 7 befindet sich eine Durchtrittsöffnung 11, was besonders in Fig. 2 ersichtlich ist. Die Durchtrittsöffnung ist nach unten hin trichterförmig zulaufend ausgebildet. Außerdem ist die Oberseite des Trennelements 1 ebenfalls trichterförmig zur Durchtrittsöffnung 11 hin verlaufend ausgebildet. So kann Abwasser nur sehr schwer überhaupt in das obere Volumen 8 gelangen, und selbst wenn, wird es über die trichterförmigen Flächen sofort wieder durch die Durchtrittsöffnung 11 nach unten zur Auslassöffnung 6 hin geleitet.

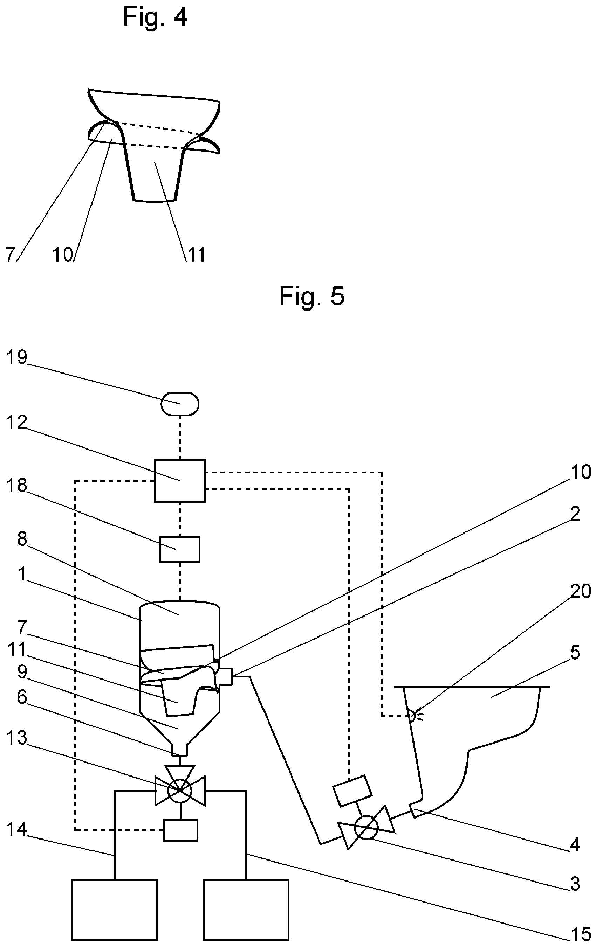

In den Fig. 3 ist das Trennelement 7 allein in einer perspektivischen Ansicht gezeigt und in der Fig. 4 in einem Längsschnitt. Wie ersichtlich, ist das Trennelement 7 im gezeigten Ausführungsbeispiel als Trichter ausgebildet, wobei an dem nach unten ragenden Trichterstutzen herum die schraubenförmig nach unten hin offene Rinne 10 angeformt ist. Das Trennelement 7 kann so als einstückiges Bauteil ausgebildet werden.

In Fig. 5 ist ein schematisches Schaltbild einer möglichen Ausführungsform einer erfindungsgemäßen Vakuumtoilette dargestellt. Eine Muschel 5 mit einem Hauptabfluss 4 ist über ein Ventil 3 mit der Einlassöffnung 2 eines bereits oben beschriebenen Vakuumtanks 1 verbunden. Stromabwärts der Auslassöffnung 6 des Vakuumtanks 1 ist ein Dreiwegeventil 13 mit einem Eingang und zwei Ausgängen angeschlossen. An den beiden Ausgängen sind jeweils eine Abflussleitung 15 für einen mit Fäkalien belasteten Abwasserstrom und eine Abflussleitung 14 für einen Abwasserstrom frei von Fäkalien vorgesehen. Die Vakuumtoilette weist ferner eine Steuereinheit 12 auf, welche mit einer Bedieneinheit 19, einer Vakuumpumpe 18 sowie mit einer Sensoreinheit 20 und den Ventilen 3,13 verbunden ist.

Ein Spülvorgang wird über die Bedieneinheit 19 ausgelöst. Die Bedieneinheit 19 kann so ausgelegt sein, dass sie dem Nutzer erlaubt eine entsprechende Taste für die Art des Abwasserstroms zu wählen. In diesem Fall ist eine Sensoreinheit 20 nicht notwendig und die Steuerung des Dreiwegeventils 13 erfolgt durch die Nutzereingabe. Sofern nur eine einzige Spültaste sowie eine Sensoreinheit 20 vorhanden ist, wird bei Betätigung der Bedieneinheit 19 die Sensoreinheit 20 aktiviert. Diese ermittelt dann, um welche Art von Abwasserstrom es sich handelt. Die Sensoreinheit 20 kann beispielsweise einen optischen Sensor umfassen, welcher in der Muschel 5 montiert ist und den Inhalt der Muschel erfasst. Es wird in weiterer Folge Spülwasser in die Muschel befördert und im Vakuumtank 1 ein Vakuum erzeugt. Im Anschluss wird das Ventil 3 unterhalb des Hauptabflusses 4 der Muschel 5 geöffnet und der Inhalt der Muschel in den Vakuumtank 1 gesaugt. Durch das Trennelement 7 wird der Abwasserstrom über die Seitenwand des Tanks gebremst und in das untere Volumen 9 des Vakuumtanks 1 geleitet. Sobald der Inhalt der Muschel 5 vollständig abgesaugt wurde, wird das Ventil 3 stromaufwärts der Einlassöffnung 2 wieder geschlossen und das Dreiwegeventil 13 wird von der Steuereinheit 12 je nach Art des Abwasserstroms zu einer der beiden Abflussleitungen 14,15 hin geöffnet. Gegebenenfalls kann über die Vakuumpumpe 18 beim Öffnen des Dreiwegeventils 13 auch im Inneren des Vakuumtanks 1 ein Überdruck angelegt werden, um den Inhalt des unteren Volumens 9 aus dem Tank zu befördern.

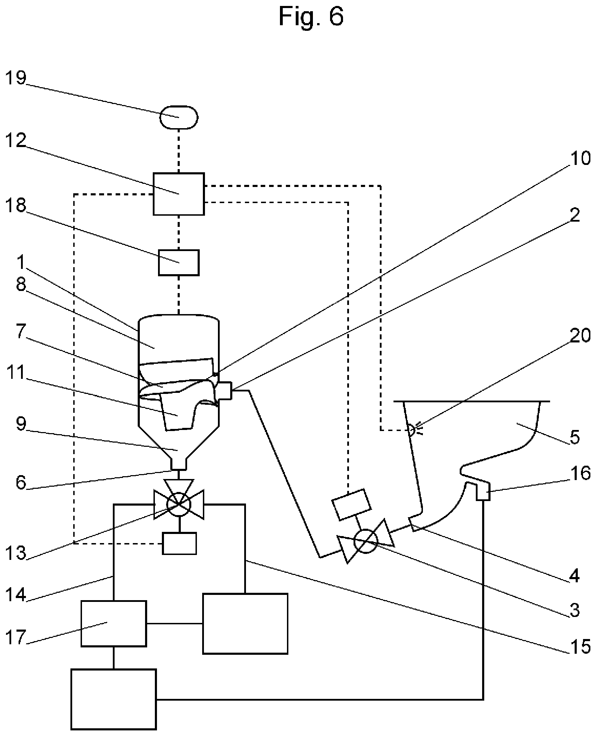

Bei der in der Fig. 6 gezeigten Ausführungsform ist eine weitere Trennvorrichtung 16 in der Muschel 5 vorgesehen, über welche der Urinstrom direkt abgeleitet werden kann. Es kann prinzipiell jede bekannte Trennvorrichtung 16 für den Urinstrom in der Muschel 5 vorgesehen werden. Bevorzugt handelt es sich um eine Trennvorrichtung, wie sie in der AT 521114 offenbart ist, bei welcher über eine Nebenableitung in der Muschel 5 der Urinstrom über den Teekanneneffekt direkt abgeleitet wird. Die Steuerung des Spülvorgangs erfolgt gleich, wie oben bei der Ausführungsform nach Fig. 5 beschrieben. Ein weiterer Unterschied in der Ausführungsform gemäß Fig. 6 besteht darin, dass in der Abflussleitung 14 für den fäkalienfreien Abwasserstrom eine Filtereinrichtung 17 vorgesehen ist. Hier wird beispielsweise im Abwasserstrom befindliches Toilettenpapier vom Abwasserstrom getrennt. Das als "fester" Bestandteil zählende Toilettenpapier kann nach der Abtrennung über die Filtereinrichtung 17 dem mit Fäkalien belasteten Abwasserstrom in der anderen Abflussleitung 15 zugeführt und gemeinsam mit diesem weiterverarbeitet werden. Der nach der Filtereinrichtung 17 verbleibende Abwasserstrom, der nur mehr Spülwasser und Spuren von Urin enthält wird im gezeigten Beispiel mit dem Urinabwasserstrom aus der Trennvorrichtung 16 für den Urinstrom zusammengeführt und weiterverarbeitet. Es ist aber auch möglich, den Spülwasserstrom getrennt einer Wiederaufbereitung als Spülwasser zuzuführen.

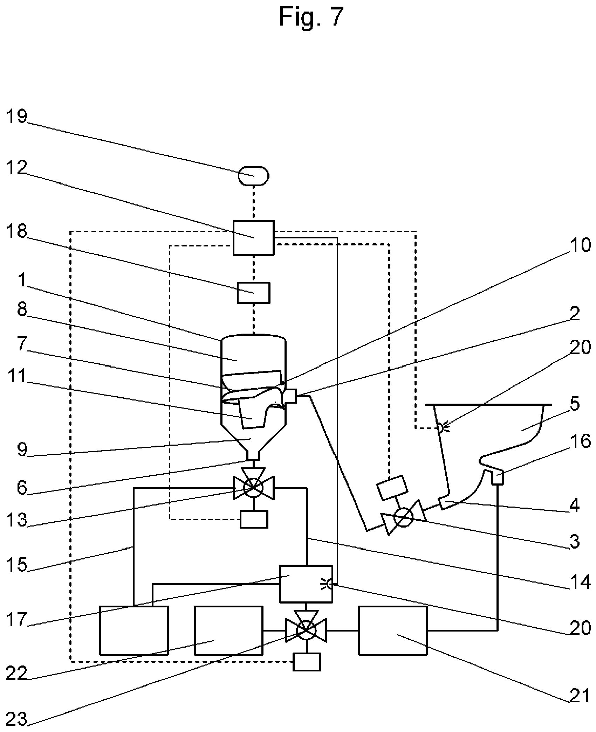

Die in der Fig. 7 dargestellte Ausführungsform zeigt in den wesentlichen Elementen die Anordnung gemäß Fig. 6, wobei hier eine weitere Auftrennung des fäkalienfreien Abwasserstroms stromabwärts der Filtereinrichtung 17 erfolgt. Um einen Abwasserstrom mit einem entsprechenden Urinanteil von einem Abwasserstrom mit einem fast ausschließlichen Spülwasseranteil zu trennen, ist stromabwärts der Filtereinrichtung ein weiteres Wegeventil 23 vorgesehen, welches ebenfalls von der Steuereinheit 12 angesteuert wird. Die Steuerung des Wegeventils 23 kann auf unterschiedliche Weise erfolgen, beispielsweise können zeitlich abgesetzte reine Reinigungsspülgänge von Abwasserspülgängen abgetrennt werden, oder aber die Steuerung erfolgt aufgrund einer weiteren Sensoreinheit 20, welche in der Filtereinrichtung 17 angeordnet ist. Dabei kann es sich beispielsweise um einen Leitfähigkeitssensor handeln, welcher den Uringehalt in dem in der Filtereinrichtung 17 befindlichen Abwasserstrom misst. Aufgrund der Information kann die Steuereinheit 12 das Wegeventil 23 entweder in Richtung einer Spülwasseraufbereitung 22 öffnen, oder aber bei höherem Uringehalt den Abwasserstrom einer Urinstromaufbereitung 21 zuführen. In die Urinstromaufbereitung 21 mündet auch die bereits in der Muschel 5 vorgesehene Trennvorrichtung 16 für den Urinstrom. Durch die zusätzliche Trennmöglichkeit können auch Urinabwasserströme bei stehender Verwendung der Toilette effektiv von Spülwasserströmen unterschieden und getrennt werden.

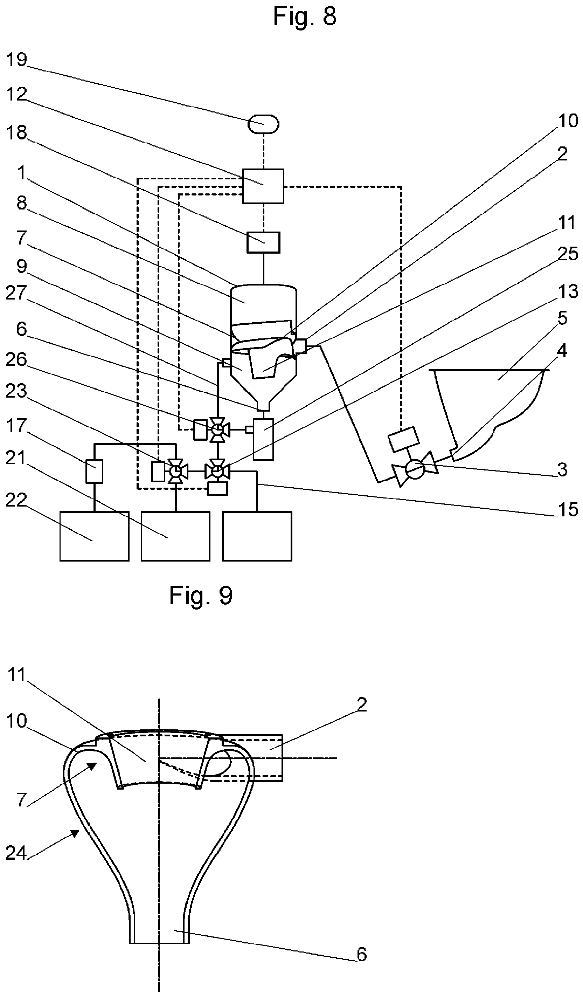

Fig. 8 zeigt eine weitere mögliche Ausführungsform, bei welcher der gesamte Abwasserstrom über den Hauptabfluss 4 in den Vakuumtank 1 transferiert wird und anschließend in unterschiedliche Ströme aufbereitet wird. Zu diesem Zweck ist anschließend an die Auslassöffnung 6 des Vakuumtanks 1 eine Zerkleinerungspumpe 25 angeschlossen, über welche der im unteren Volumen 9 des Vakuumtanks 1 befindliche Abwasserstrom weitertransportiert und homogenisiert wird. Handelt es sich um einen Urinabwasserstrom, so wird dieser über die stromabwärts der Zerkleinerungspumpe 25 befindlichen Dreiwegeventile 26,13 und das Wegeventil 23 in Richtung einer Urinstromaufbereitung 21 umgeleitet. Handelt es sich um einen reinen Spülwasserstrom, so wird dieser über eine Filtereinrichtung 17 in eine Spülwasseraufbereitung 22 umgeleitet. Die Filtereinrichtung 17 kann dabei natürlich auch zwischen dem Dreiwegeventil 13 und dem Wegeventil 23 angeordnet sein. Die Steuerung der Spülvorgänge sowie die Stellungen der Ventile 26,13,23 werden dabei wieder von der Steuereinheit 12 entweder aufgrund von Benutzereingaben an der Bedieneinheit 19 oder aufgrund von Sensoreinheiten 20 gesteuert. Um einen möglichst geringen Wasserverbrauch zu erreichen, werden die Abwasserströme von den Spülvorgängen auch zeitlich weitgehend getrennt. So wird beispielsweise bei einem Urinabwasserstrom dieser beim Spülvorgang zuerst über den Vakuumtank 1 abgesaugt und in die entsprechende Urinstromaufbereitung geleitet. Anschließend kommt ein separater Spülgang mit ca. 1 l Wasser, welches der Spülwasseraufbereitung 22 zugeführt wird.

Handelt es sich um einen mit Fäkalien belasteten Abwasserstrom, so kann es aufgrund der geringen Wassermenge beim Spülvorgang dazu kommen, dass der Abwasserstrom beim ersten Durchlauf durch die Zerkleinerungspumpe 25 nicht ausreichend homogenisiert wird. Auch hier wird der Spülvorgang zur Einsparung von Spülwasser getrennt ausgeführt. Zum Transport der Fäkalien werden lediglich beispielsweise 0,3 l Wasser eingesetzt. Aus diesem Grund kann die Steuereinheit das Dreiwegeventil 26 in Richtung einer Rückführung 27 umstellen, welche mit dem unteren Volumen 9 des Vakuumtanks 7 verbunden ist. Somit kann der Abwasserstrom mehrfach durch die Zerkleinerungspumpe 25 im Kreis geführt werden, bis der Abwasserstrom ausreichend homogenisiert ist. Anschließend wird er über die Dreiwegeventile 26,13 in Richtung einer Abflussleitung 15 für den Fäkalienstrom umgeleitet. Erst danach kommt es zum eigentlichen Reinigungsspülgang für die Muschel 5 sowie für das untere Volumen 9 des Vakuumtanks 1, wofür ca. 1,5 l Spülwasser eingesetzt werden. Dieses Spülwasser kann aufgrund der geringen Verschmutzung dann ebenfalls über die Spülwasseraufbereitung 22 wiederverwendet werden. In Summe kommt es bei einer derartigen Toilette dann pro Tag auf einen extrem geringen Gesamtspülwasserverbrauch von nur etwa 2,6 l gegenüber von etwa 40 l bei einer herkömmlichen Vakuumtoilette oder gar etwa 200 l bei einer herkömmlichen Spültoilette.

In Fig. 9 ist in einer schematischen Schnittansicht eine mögliche Ausführungsform eines unteren Tankabschnitts 24 dargestellt. Der untere Tankabschnitt 24 ist hierbei gemeinsam mit dem Trennelement 7 als oberer Abschluss des Tankabschnitts 24 in einem Teil ausgeführt. Die Rinne 10 wird dabei durch das Trennelement 7 gemeinsam mit dem obersten Wandabschnitt der Seitenwände des unteren Tankabschnitts 24 ausgebildet. In den unteren Tankabschnitt 24 führt im Bereich des Trennelements 7 die Einlassöffnung 2 und am tiefsten Punkt befindet sich die Auslassöffnung 6. Nach oben hin befindet sich die Durchtrittsöffnung 11, an welcher ein oberer Tankabschnitt (nicht gezeigt) zur Vergrößerung des vakuumierbaren Volumens angeschlossen werden kann. Je nach Anwendungsfall und benötigtem Vakuum können so obere Tankabschnitte mit jeweils unterschiedlichen Geometrien oder Volumina angeordnet werden. Der untere Tankabschnitt bleibt dabei immer gleich, was die Fertigungskosten gering hält.

Durch die vorliegende Erfindung kann somit eine Vakuumtoilette geschaffen werden, welche einerseits mit extrem geringen Mengen an Spülwasser betrieben werden kann, und die andererseits beim Einsatz als Trenntoilette noch besser trennbare und bereits konzentrierte Abwasserströme erzeugt, was auch für die weitere Aufbereitung dieser Abwasserströme deutliche Energieeinsparungen bedeutet.

## Patentansprüche

1. Vakuumtank (1) für eine Vakuumtoilette, wobei der Vakuumtank (1) eine an einer Seitenwand des Tanks angeordnete Einlassöffnung (2), welche über ein zwischengeschaltetes Ventil (3) mit dem Hauptabfluss (4) einer Muschel (5) verbindbar ist, und eine am tiefsten Punkt angeordnete Auslassöffnung (6) für die Weiterleitung des abgesaugten Abwasserstroms umfasst, und wobei ferner über die Auslassöffnung (6) oder über weitere Öffnungen im Vakuumtank (1) die Luft im Tank auf einen Druck unterhalb des Atmosphärendrucks vakuumierbar ist, wobei der Vakuumtank (1) durch ein Trennelement (7) in ein oberes (8) und ein unteres Volumen (9) unterteilt ist, und wobei das Trennelement (7) in etwa auf der Höhe der Einlassöffnung (2) im Tank angeordnet ist, **dadurch gekennzeichnet, dass** eine gemeinsam mit einem Seitenwandabschnitt des Vakuumtanks (1) entlang des Umfangs des Tanks verlaufende, vorzugsweise schraubenlinienförmig ausgebildete, nach unten offene Rinne (10) ausbildet ist, welche ausgehend von der Einlassöffnung (2) zumindest einmal um den im Wesentlichen horizontalen Umfang herum zum unteren Volumen (9) hin verläuft, und wobei mittig im Trennelement (7) eine Durchtrittsöffnung (11) zwischen oberem (8) und unterem Volumen (9) angeordnet ist, welche zum unteren Volumen (9) hin trichterförmig ausgebildet ist, und wobei gegebenenfalls die Oberseite des Trennelements (7) ebenfalls trichterförmig zur Durchtrittsöffnung (11) hin zulaufend ausgebildet ist.

2. Vakuumtank (1) für eine Vakuumtoilette nach Anspruch 1, **dadurch gekennzeichnet, dass** das Trennelement (7) gemeinsam mit einem das untere Volumen ausbildenden Tankabschnitt (24) einstückig ausgebildet ist und über die Durchtrittsöffnung (11) mit einem das obere Volumen ausbildenden Tankabschnitt verbunden ist.

3. Vakuumtoilette umfassend eine Muschel (5) mit einem Hauptabfluss (4), eine Spülung, einen Vakuumtank (1) gemäß Anspruch 1 mit einer in einer Seitenwand angeordneten Einlassöffnung (2) und einer am tiefsten Punkt angeordneten Auslassöffnung (6), wobei der Hauptabfluss (4) der Muschel (5) über ein Ventil (3) mit der Einlassöffnung (2) des Vakuumtanks (1) verbunden ist, sowie eine Steuereinheit (12) mit zumindest einer Bedieneinheit (19) für den Benutzer, über welche ein Spülvorgang auslösbar ist, **dadurch gekennzeichnet, dass** der Vakuumtank (1) durch ein Trennelement (7) in ein oberes (8) und ein unteres Volumen (9) unterteilt ist, wobei das Trennelement (7) in etwa auf der Höhe der Einlassöffnung (2) im Tank angeordnet ist und gemeinsam mit einem Seitenwandabschnitt des Vakuumtanks (1), eine entlang des Umfangs des Tanks verlaufende, vorzugsweise schraubenlinienförmig ausgebildete, nach unten offene Rinne (10) ausbildet, welche ausgehend von der Einlassöffnung (2) zumindest einmal um den im wesentlichen horizontalen Umfang herum zum unteren Volumen (9) hin verläuft, und wobei mittig im Trennelement (7) eine Durchtrittsöffnung (11) zwischen oberem (8) und unterem Volumen (9) angeordnet ist, welche zum unteren Volumen (9) hin trichterförmig ausgebildet ist, und wobei gegebenenfalls die Oberseite des Trennelements (7) ebenfalls trichterförmig zur Durchtrittsöffnung (11) hin zulaufend ausgebildet ist.

4. Vakuumtoilette nach Anspruch 3, **dadurch gekennzeichnet, dass** das Trennelement (7) gemeinsam mit einem das untere Volumen ausbildenden Tankabschnitt (24) einstückig ausgebildet ist und über die Durchtrittsöffnung (11) mit einem das obere Volumen ausbildenden Tankabschnitt verbunden ist.

5. Vakuumtoilette nach Anspruch 3 oder 4, **dadurch gekennzeichnet, dass** stromabwärts der Auslassöffnung (6) des Vakuumtanks (1) ein Dreiwegeventil (13) mit einem Eingang und zwei Ausgängen vorgesehen ist, welches über die Steuereinheit (12) ansteuerbar ist, um den Abwasserstrom je nachdem, ob es sich um einen Urin- oder Fäkalienstrom handelt, in zwei stromabwärts angeordnete unterschiedliche Abflussleitungen (14,15) zu lenken.

6. Vakuumtoilette nach Anspruch 5, **dadurch gekennzeichnet, dass** die Umschaltung des Dreiwegeventils (13) durch Eingabe an der Bedieneinheit (19) erfolgt.

7. Vakuumtoilette nach Anspruch 5, **dadurch gekennzeichnet, dass** in der Muschel (5) eine Sensoreinheit (20) vorgesehen ist, die mit der Steuereinheit (12) verbunden ist und die Art des Abwasserstroms, nämlich ob es sich um einen Urin- oder Fäkalienstrom handelt, erfasst, und die Umschaltung des Dreiwegeventils (13) aufgrund der Sensordaten durch einen Steuerimpuls von der Steuereinheit (12) erfolgt.

8. Vakuumtoilette nach einem der Ansprüche 3 bis 7, **dadurch gekennzeichnet, dass** in der Muschel (5) bereits stromaufwärts des Hauptabflusses (4) eine weitere Trennvorrichtung (16) zur Ableitung eines Großteils des Urinstroms vorgesehen ist.

9. Vakuumtoilette nach einem der Ansprüche 5 bis 8, **dadurch gekennzeichnet, dass** in der stromabwärts des Dreiwegeventils (13) angeordneten Abflussleitung (14) für den fäkalienfreien Abwasserstrom eine Filtereinrichtung (17) vorgesehen ist.

10. Vakuumtoilette nach einem der Ansprüche 3 bis 9, **dadurch gekennzeichnet, dass** stromabwärts der Auslassöffnung (6) eine Zerkleinerungspumpe (25) angeordnet ist, welche den aus dem Vakuumtank (1) kommenden Abwasserstrom weiterbefördert und gegebenenfalls homogenisiert, wobei stromabwärts der Zerkleinerungspumpe gegebenenfalls ein Dreiwegeventil (26) mit einem Eingang und zwei Ausgängen vorgesehen ist, wobei ein Ausgang mit der weiteren Abflussleitung verbunden ist und der zweite Ausgang über eine Rückführung (27) mit dem unteren Volumen (9) des Vakuumtanks (1) verbunden ist.

## Claims

1. Vacuum tank (1) for a vacuum toilet, the vacuum tank (1) comprising a side wall having an intake port (2) connectable to a drain (4) of a toilet bowl (5) via an interposed valve (3) and an output port (6) at a lowest point for passage of an extracted waste-water stream, and furthermore air in the tank being maintained via the output port (6) or via further openings in the vacuum tank (1) at a sub atmospheric pressure, wherein a partition (7) divides the vacuum tank (1) into an upper compartment (8) and a lower compartment (9), the partition (7) being approximately level with the intake port (2) in the tank, **characterized in that**, a downwardly open groove (10) is formed together with a side wall of the vacuum tank (1) in a preferably helicoidally shape, that, starting from the intake port (2), runs at least once around the substantially horizontal circumference toward the lower compartment (9), and wherein a passage (11) extends centrally in the partition (7) between the upper compartment (8) and lower compartment (9), and wherein the passage (11) in the partition (7) tapers at a lower end like a funnel downward and an upper end of the passage (11) of the partition (7) also optionally flares like a funnel upward.

2. Vacuum tank (1) for a vacuum toilet according to claim 1, **characterized in that** the partition (7) is formed in one piece together with a tank section (24) forming the lower compartment and is connected via the passage (11) to a tank section forming the upper compartment.

3. Vacuum toilet with a bowl (5) with a main drain (4), a rinsing device, a vacuum tank (1) according to claim 1 with a side wall having an intake port (2) and an output port (6) at a lowest point, a valve (3) connecting the main drain (4) of the bowl (5) to the intake port (2) of the vacuum tank (1), and a controller (12) having at least one operator unit (19) for the user for initiating a flushing process, **characterized in that** a partition (7) divides the vacuum tank (1) into an upper compartment (8) and a lower compartment (9), the partition (7) being approximately level with the intake port (2) in the tank and together with a side wall section of the vacuum tank (1) forms a preferably helicoidally shaped, downwardly open groove (10) that, starting from the intake port (2), runs at least once around a substantially horizontal circumference toward the lower compartment (9), and wherein a passage (11) extends centrally through the partition (7) between the upper compartment (8) and lower compartment (9), which passage (11) is funnel shaped toward the lower compartment (9), and optionally an upper side of the partition (7) is formed as a funnel.

4. Vacuum toilet according to claim 3, **characterized in that** the partition (7) is formed in one piece together with a tank section (24) forming the lower compartment and is connected via the passage (11) to a tank section forming the upper compartment.

5. Vacuum toilet according to claim 3 or 4, **characterized in that** a three-way valve (13) with an inlet and two outlets is provided downstream of the output port (6) of the vacuum tank (1) that can be controlled by the controller (12) in order to direct a waste-water stream into two different downstream outflow lines (14, 15) depending on whether the stream is a urine or faecal stream.

6. Vacuum toilet according to claim 5, **characterized in that** the three-way valve (13) is switched by input to the operator unit (19).

7. Vacuum toilet according to claim 5, **characterized in that** the bowl (5) has a sensor (20) that is connected to the controller (12) and that detects the type of waste-water stream, namely whether it is a urine or faeces stream, and the three-way valve (13) is switched over by the controller (12) on the basis of the sensor data.

8. Vacuum toilet according to one of claims 3 to 7, **characterized in that** a further diverter (16) for discharging most of the urine stream is already provided in the bowl (5) upstream of the main drain (4).

9. Vacuum toilet according to one of claims 5 to 8, **characterized in that** a filter device (17) is provided in the outflow line (14) downstream of the three-way valve (13) for a waste-water stream free of faeces.

10. Vacuum toilet according to one of claims 3 to 9, **characterized in that** a comminution pump (25) is provided downstream of the output port (6) for conveying and optionally homogenizing the waste-water stream coming from the vacuum tank (1), wherein a three-way valve (26) with an inlet and two outlets is optionally provided downstream of the comminution pump, and one of the outlets is connected to the further outflow line and the other outlet is connected to the lower compartment (9) of the vacuum tank (1) via a return line (27).

## Revendications

1. Réservoir sous vide (1) pour des toilettes sous vide, le réservoir sous vide (1) comprenant une ouverture d'entrée (2) disposée sur une paroi latérale du réservoir, laquelle peut être reliée, par l'intermédiaire d'une vanne (3) interposée, à l'évacuation principale (4) d'une cuvette (5), ainsi qu'une ouverture de sortie (6) disposée au point le plus bas pour l'évacuation du flux d'eaux usées aspiré, et dans lequel, en outre, l'air contenu dans le réservoir peut être mis sous vide à une pression inférieure à la pression atmosphérique par l'ouverture de sortie (6) ou par d'autres ouvertures du réservoir sous vide (1), le réservoir sous vide (1) étant divisé par un élément de séparation (7) en un volume supérieur (8) et un volume inférieur (9), l'élément de séparation (7) étant disposé sensiblement à la hauteur de l'ouverture d'entrée (2) dans le réservoir, **caractérisé en ce que** une rigole (10) ouverte vers le bas est formé, conjointement par une section de paroi latérale du réservoir sous vide (1), s'étendant le long de la circonférence du réservoir, de préférence en forme hélicoïdale, laquelle, à partir de l'ouverture d'entrée (2), s'étend au moins une fois autour de la circonférence essentiellement horizontale vers le volume inférieur (9), et **en ce qu'**une ouverture de passage (11) est disposée au centre de l'élément de séparation (7) entre le volume supérieur (8) et le volume inférieur (9), ladite ouverture étant configurée en forme d'entonnoir vers le volume inférieur (9), et, le cas échéant, la face supérieure de l'élément de séparation (7) étant également configurée en forme d'entonnoir convergeant vers l'ouverture de passage (11).

2. Réservoir sous vide (1) pour des toilettes sous vide selon la revendication 1, **caractérisé en ce que** l'élément de séparation (7) est formé d'une seule pièce avec une section de réservoir (24) formant le volume inférieur et est relié, par l'ouverture de passage (11), à une section de réservoir formant le volume supérieur.

3. Toilette sous vide comprenant une cuvette (5) avec une évacuation principale (4), un dispositif de rinçage, un réservoir sous vide (1) selon la revendication 1 comportant une ouverture d'entrée (2) disposée dans une paroi latérale et une ouverture de sortie (6) disposée au point le plus bas, l'évacuation principale (4) de la cuvette (5) étant reliée, par une vanne (3), à l'ouverture d'entrée (2) du réservoir sous vide (1), ainsi qu'une unité de commande (12) avec au moins une unité de commande (19) pour l'utilisateur permettant de déclencher un cycle de rinçage, **caractérisée en ce que** le réservoir sous vide (1) est divisé par un élément de séparation (7) en un volume supérieur (8) et un volume inférieur (9), l'élément de séparation (7) étant disposé sensiblement à la hauteur de l'ouverture d'entrée (2) et formant, conjointement par une section de paroi latérale du réservoir sous vide (1), une rigole (10) ouverte vers le bas s'étendant le long de la circonférence du réservoir, de préférence en forme hélicoïdale, laquelle, à partir de l'ouverture d'entrée (2), s'étend au moins une fois autour de la circonférence essentiellement horizontale vers le volume inférieur (9), et **en ce qu'**une ouverture de passage (11) est disposée au centre de l'élément de séparation (7) entre le volume supérieur (8) et le volume inférieur (9), ladite ouverture étant configurée en forme d'entonnoir vers le volume inférieur (9), et, le cas échéant, la face supérieure de l'élément de séparation (7) étant également configurée en forme d'entonnoir convergeant vers l'ouverture de passage (11).

4. Toilette sous vide selon la revendication 3, **caractérisée en ce que** l'élément de séparation (7) est formé d'une seule pièce avec une section de réservoir (24) formant le volume inférieur et est relié, par l'ouverture de passage (11), à une section de réservoir formant le volume supérieur.

5. Toilette sous vide selon la revendication 3 ou 4, **caractérisée en ce qu'**en aval de l'ouverture de sortie (6) du réservoir sous vide (1) est prévue une vanne à trois voies (13) comportant une entrée et deux sorties, pouvant être commandée par l'unité de commande (12), afin de diriger le flux d'eaux usées, selon qu'il s'agit d'un flux d'urine ou de matières fécales, vers deux conduites d'évacuation distinctes (14, 15) disposées en aval.

6. Toilette sous vide selon la revendication 5, **caractérisée en ce que** la commutation de la vanne à trois voies (13) est effectuée par une saisie sur l'unité de commande (19).

7. Toilette sous vide selon la revendication 5, **caractérisée en ce qu'**une unité de capteur (20) est prévue dans la cuvette (5), ladite unité étant reliée à l'unité de commande (12) et détectant la nature du flux d'eaux usées, à savoir s'il s'agit d'un flux d'urine ou de matières fécales, la commutation de la vanne à trois voies (13) étant effectuée par une impulsion de commande émise par l'unité de commande (12) sur la base des données du capteur.

8. Toilette sous vide selon l'une quelconque des revendications 3 à 7, **caractérisée en ce qu'**un dispositif de séparation supplémentaire (16) destiné à détourner une grande partie du flux d'urine est déjà prévu dans la cuvette (5) en amont de l'évacuation principale (4).

9. Toilette sous vide selon l'une quelconque des revendications 5 à 8, **caractérisée en ce qu'**un dispositif de filtration (17) est prévu dans la conduite d'évacuation (14), disposée en aval de la vanne à trois voies (13), pour le flux d'eaux usées exempt de matières fécales.

10. Toilette sous vide selon l'une quelconque des revendications 3 à 9, **caractérisée en ce qu'**une pompe de broyage (25) est disposée en aval de l'ouverture de sortie (6), ladite pompe transportant le flux d'eaux usées provenant du réservoir sous vide (1) et, le cas échéant, l'homogénéisant, et **en ce qu'**en aval de la pompe de broyage est éventuellement prévue une vanne à trois voies (26) comportant une entrée et deux sorties, l'une des sorties étant reliée à la conduite d'évacuation supplémentaire et la seconde sortie étant reliée, par un conduit de retour (27), au volume inférieur (9) du réservoir sous vide (1).
